# EUROPÄISCHE PATENTANMELDUNG

(11) **EP 1 132 671 A2**
(43) Veröffentlichungstag der Anmeldung: **12.09.2001**
(21) Anmeldenummer: 01105716.3
(22) Anmeldetag: 07.03.2001
(51) Int. Cl.: F16K 27/10

(54) **Schiebergehäusemittelteil**

(30) Priorität: 07.03.2000 DE 10010367
(71) Anmelder: Josch Strahlschweisstechnik GbmH, 06193 Teicha (DE)
(72) Erfinder: Schenke, Joachim, 39118 Magdeburg (DE); Sobisch, Götz, 06193 Teichau (DE); Philipp, Steffen, 06188 Hohenthurm (DE)
(74) Vertreter: Leinung, Günter

(57) **Zusammenfassung**

Die Erfindung betrifft ein Schiebergehäusemittelteil, welches durch Verschweißung von Schweißbaugruppen hergestellt wird.

Das Schiebergehäusemittelteil besteht aus den Bauteilen Rohr 1, Stutzen 2, Gehäusesitz 3, Boden 4 und Folie 5. Die Bauteile 1, 2 und 4 werden vor dem Schweißen mechanisch bearbeitet und komplett in der finalen Position montiert und über ein geeignetes Testverfahren, bevorzugt mit einem Laser, geheftet und mittels eines Elektronenstrahles verschweißt.

## Beschreibung

Diese Erfindung betrifft ein Schiebergehäusemittelteil entsprechend dem Oberbegriff des Anspruchs 1.

Es ist bekannt, daß Schiebergehäuse durch die Verschweißung von Schweißbaugruppen hergestellt werden.
Variante 1: Geschmiedete Halbschalen, an denen die Stutzen angeschmiedet sind, werden aufeinandergelegt und mit oder ohne Zusatzmaterial bei entsprechender Nahtvorbereitung verschweißt. Die Schweißung in der Untervariante ohne Zusatzmaterial wird mit dem Elektronenstrahl vorgenommen.

Variante 2: Rohr und Halbkugelboden werden verschweißt mit bzw. ohne Zusatzmaterial. Danach werden die Öffnungen für die Stutzen ausgefräst. Anschließend werden die Stutzen mit einer die Öffnungen für die Stutzen ausgefräst. Anschließend werden die Stutzen mit einer entsprechenden Nahtvorbereitung in das Gehäuserohr eingeschoben und mit einer entsprechenden Nahtvorbereitung mit Zusatzmaterial verschweißt.

### Nachteile des Standes der Technik sind bei

Variante 1: Hohe Kosten für Gesenk, technologische Grenzen für die Schmiedeausformung des Gehäusesitzes bzw. der Stutzenlänge, hohe Rüstkosten des Schmiedens bei kleinen Stückzahlen.

Variante 2: Hohe Kosten für die Einschweißung der Stutzen sowie hohe Kosten für die Bearbeitung des Gehäusesitzes nach dem Schweißen.

Aufgabe der Erfindung ist es, ein universell einsetzbares elektronenstrahlgeschweißtes Gehäusemittelteil für Schieber zu schaffen, daß ohne Gesenke hergestellt werden kann und aus einfachen mechanisch bearbeiteten Rohren und Rundmaterialien besteht.

Diese Aufgabe wird mit einer Gehäusekonstruktion mit den Merkmalen des Anspruchs 1 gelöst.

Rohr und Rundmaterial in den für den Armaturenbau typischen Werkstoffen werden durch den Händler vorgehalten und sind somit kurzfristig verfügbar. Die zeit- und kostenaufwendige Beschaffung von geschmiedeten, gegossenen und gepreßten Bauteilen entfällt.

Die Konstruktion ist sowohl für alle gängigen Gehäusewandstärkenbereiche des Armaturenbaus, d.h. von Niederdruck bis Hochdruck geeignet.

Die Konstruktion des Gehäusemittelteiles ist geeignet als Basiselement für vielfältige Komplettierungsvarianten, wie einzuschweißender Flansche verschiedener Druckstufen und Normen (DIN, ANSI, etc.), Deckelausführungen sowie Gehäuse mit Aufsatz oder druckdichtender Deckelfunktion.

Durch die Verwendung von Stutzen aus korrosionsbeständigem Material kann das Auftragsschweißen des korrosionsbeständigen Gehäusesitzes entfallen.

Ausführungsbeispiele der Erfindung sind in den Zeichnungen dargestellt und werden wie folgt beschrieben.

Es zeigen:
- Figur 1:: Schiebergehäusemittelteil Rohr ohne Lötfolie
- Figur 2:: Schiebergehäusemittelteil Rohr mit Lötfolie.

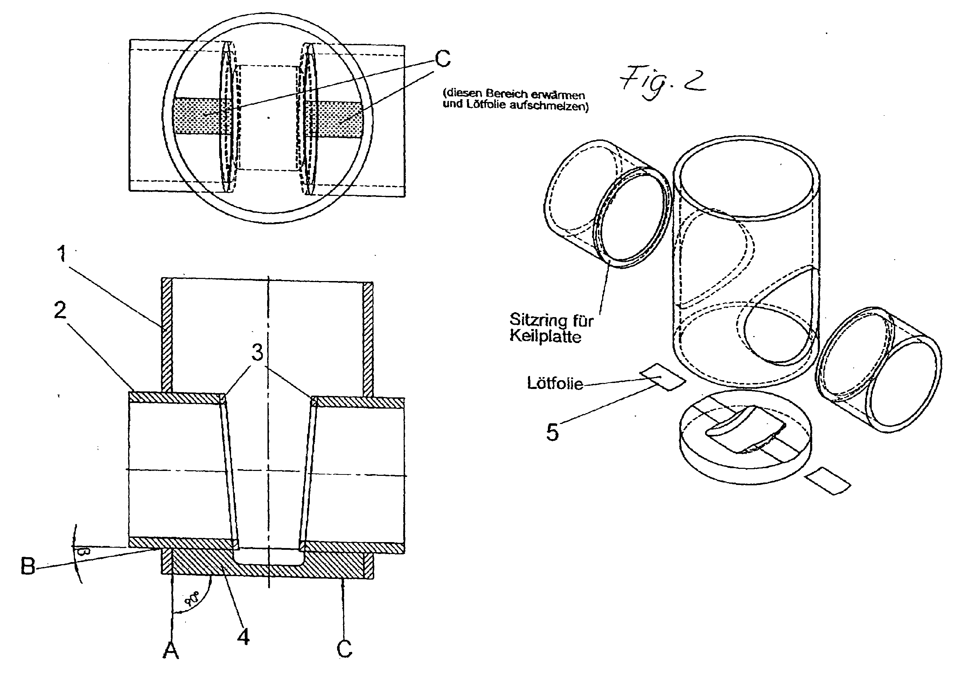

Das Schiebergehäusemittelteil besteht aus den Bauteilen Rohr 1, Stutzen 2 (mit korrosionsbeschädigtem Gehäusesitz 3), Boden 4 und Folie 5 (nur Figur 2). Die Bauteile 1, 2 und 4 werden vor dem Schweißen mechanisch bearbeitet und komplett in der finalen Position montiert und über ein geeignetes Verfahren, bevorzugt mit dem Laser, geheftet. Die Bauteile werden dann in der Elektronenstrahlschweißanlage positioniert und wie folgt mit dem Elektronenstrahl verschweißt.

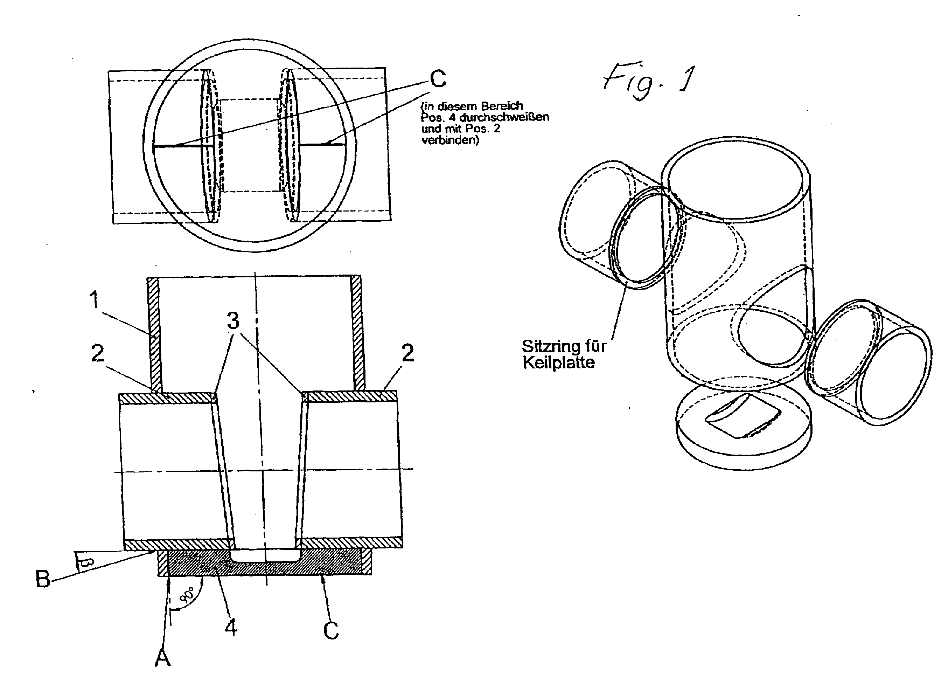

In Figur 1:
■ Komplette Durchschweißung der Verbindung Rohr 1 mit Stutzen 2, indem der Elektronenstrahl B mit dem Winkel β um die Rohrleitungsachse des Stutzens 2 geführt wird.
■ Einschweißen des Bodens 4 mit dem Elektronenstrahl A, wobei der Elektronenstrahl A parallel umlaufend zur Rohrleitungsachse Rohr 1 geführt wird.
■ Ziehen einer Festigkeitsnaht zum Anschweißen des Stutzens 2 an den Boden 4, um eine starre, unverrückbare Arretierung des Stutzens zu erhalten.

In Figur 2:
■ Komplette Durchschweißung der Verbindung Rohr 1 mit Stutzen 2, in dem der Elektronenstrahl B mit dem Winkel β um die Rohrleitungsachse des Stutzens 2 geführt wird.
■ Einschweißen des Bodens 4 mit dem Elektronenstrahl A, wobei der Elektronenstrahl A parallel umlaufend zur Rohrleitungsachse Rohr 1 geführt wird.
■ Erzeugung des Lötprozesses, d. h. Schmelzen der Lötfolie 5, durch Wärmeeinleitung mit dem Elektronenstrahl in der Breite der Fläche der Lötfolie 5, um eine starre, unverrückbare Arretierung des Stutzens 2 bei gleichzeitiger spaltkorrosionsfreier Ausführung der Verbindung Boden 4 mit Stutzen 2 zu erhalten.

## Patentansprüche

1. Schiebergehäusemittelteil, **dadurch gekennzeichnet, daß**
zum Rohr (1) die Stutzen (2) mit Gehäusesitz (3) und der Boden (4) eingeschoben werden, bei einer jeweiligen Toleranzgröße zwischen Rohr (1) und Boden (4) und Rohr (1) und Stutzen (2) von <=0,1 mm zwischen den Berührungsflächen und daß der Boden (4) die Stutzen (2) linienförmig berührt und daß die Berührungsfläche zwischen Boden (4) und den Stutzen (2) durch den Elektronenstrahl C durch den Boden (4) hindurch verschweißt und somit arretiert wird und daß der Boden (4) durch den Elektronenstrahl A, der 90° zur Achse des Rohres (1) geführt wird, druckdicht verschweißt wird.

2. Schiebergehäusemittelteil nach Anspruch 1, **dadurch gekennzeichnet, daß**
zusätzlich eine Lötfolie (5) zwischen Boden (4) und Stutzen (2) mit Gehäusesitz (3) gelegt wird und daß zur Lageausrichtung der Lötfolie (5) der Boden (4) mit einer Nut versehen wird mit einer Tiefe, die 0,1 mm kleiner der Dicke der Lötfolie (5) ist und die Lötfolie (5) durch die Wärmeeinbringung mit dem Elektronenstrahl C geschmolzen wird und somit arretiert wird.

3. Schiebergehäusemittelteil nach einem der Ansprüche 1 und 2, **dadurch gekennzeichnet, daß**
die eingeschobenen Stutzen (2) aus korrosionsbeständigem Material bestehen, so daß die Aufbringung des korrosionsbeständigen Sitzes (3) entfällt.

4. Schiebergehäusemittelteil nach einem der Ansprüche 1 bis 3, **dadurch gekennzeichnet, daß**
der korrosionsbeständige Gehäusesitz (3) außerhalb des Gebäudes, d. h. vor der Montage des Schiebergehäusemittelteiles, durch Auftragschweißen oder Schweißen eines Ringes aufgebracht und mechanisch fertig bearbeitet wird.

5. Schiebergehäusemittelteil nach einem der Ansprüche 1 bis 4, **dadurch gekennzeichnet, daß**
das Rohr (1) nahtlos, geschweißt oder gewickelt oder aus Rundmaterial hergestellt ist.

6. Schiebergehäusemittelteil nach Anspruch 2, **dadurch gekennzeichnet, daß**
der Boden (4) entweder plan auf dem Stutzen (2) aufliegt und somit eine Linienberührung entsteht oder daß der Boden (4) mit einer Eindrehung gleich dem Außendurchmesser des Rohres (4) versehen wird, so daß eine Flächenberührung zwischen Rohr (4), Folie (5) und Stutzen (2) entsteht.
